(19) Europäisches Patentamt
European Patent Office
Office européen des brevets

(11) **EP 4 660 584 A1**

(12) **EUROPEAN PATENT APPLICATION**
published in accordance with Art. 153(4) EPC

(43) Date of publication:
**10.12.2025 Bulletin 2025/50**

(21) Application number: **23919184.4**

(22) Date of filing: **30.03.2023**

(51) International Patent Classification (IPC):
**G01C 21/20** (2006.01)   **G01S 17/86** (2020.01)
**G08G 1/14** (2006.01)

(52) Cooperative Patent Classification (CPC):
**G01C 21/20; G01S 17/86; G08G 1/14**

(86) International application number:
**PCT/CN2023/085085**

(87) International publication number:
**WO 2024/159613 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.02.2023 CN 202310109863**

(71) Applicant: **Momenta (Suzhou) Technology Co., Ltd.**
**Suzhou, Jiangsu 215100 (CN)**

(72) Inventors:
• **LI, Jianglong**
  **Beijing 100080 (CN)**
• **LUO, Jinhui**
  **Beijing 100080 (CN)**
• **SHAN, Le**
  **Beijing 100080 (CN)**

(74) Representative: **Murgitroyd & Company**
**165-169 Scotland Street**
**Glasgow G5 8PL (GB)**

(54) **TARGET AREA POSITIONING METHOD AND APPARATUS, ELECTRONIC DEVICE, AND MEDIUM**

(57) The embodiments of the present disclosure provide a target region positioning method and apparatus, and an electronic device and a medium. The method includes: acquiring a first region position corresponding to first position and pose data and a second region position corresponding to second position and pose data, where the first region position is a region position of a target region observed under a position and pose corresponding to the first position and pose data, and the second region position is a region position of the target region observed under a position and pose corresponding to the second position and pose data; acquiring a first weight of the first region position and a second weight of the second region position, where the first weight is acquired based on the first position and pose data and the first region position and the second weight is acquired based on the second position and pose data and the second region position; based on the first weight and the second weight, performing region position fusion processing on the first region position and the second region position to acquire a third region position of the target region. In the embodiments of the present disclosure, the positioning accuracy for the target region can be improved.

A first region position corresponding to first position and pose data and a second region position corresponding to second position and pose data are acquired, where the first region position is a region position of a target region observed under a position and pose corresponding to the first position and pose data, and the second region position is a region position of the target region observed under a position and pose corresponding to the second position and pose data. — 101

A first weight of the first region position and a second weight of the second region position are acquired, where the first weight is acquired based on the first position and pose data and the first region position and the second weight is acquired based on the second position and pose data and the second region position. — 102

Based on the first weight and the second weight, region position fusion processing is performed on the first region position and the second region position to acquire a third region position of the target region. — 103

FIG.1

EP 4 660 584 A1

## Description

## TECHNICAL FIELD

The present disclosure relates to the technical field of electronic devices, and in particular to a target region positioning method and apparatus, and an electronic device and a medium.

## BACKGROUND

In order to achieve positioning for a target region, a positioned may be used. But, this positioning manner generates a lower positioning accuracy for the target region.

## SUMMARY

One or more embodiments of the present disclosure provide a target region positioning method and apparatus, and an electronic device and a medium, so as to improve a positioning accuracy for a target region.

According to a first aspect of embodiments of the present disclosure, there is provided a target region positioning method. The method includes: acquiring a first region position corresponding to first position and pose data and a second region position corresponding to second position and pose data, where the first region position is a region position of a target region observed under a position and pose corresponding to the first position and pose data, and the second region position is a region position of the target region observed under a position and pose corresponding to the second position and pose data; acquiring a first weight of the first region position and a second weight of the second region position, where the first weight is acquired based on the first position and pose data and the first region position and the second weight is acquired based on the second position and pose data and the second region position; based on the first weight and the second weight, performing region position fusion processing on the first region position and the second region position to acquire a third region position of the target region.

Optionally, the target region positioning method further includes: based on the first position and pose data and the first region position, acquiring a first observation distance for the target region under the position and pose corresponding to the first position and pose data, and based on the second position and pose data and the second region position, acquiring a second observation distance for the target region under the position and pose corresponding to the second position and pose data; where the first weight is acquired based on the first observation distance and the second weight is acquired based on the second observation distance.

Optionally, when the first observation distance is smaller than a preset observation distance threshold, the first weight is a first difference between the observation distance threshold and the first observation distance; when the second observation distance is smaller than the observation distance threshold, the second weight is a second difference between the observation distance threshold and the second observation distance; where an observation accuracy for the target region under the observation distance smaller than the observation distance threshold satisfies a preset accuracy requirement.

Optionally, the target region positioning method further includes: acquiring first trajectory data including position and pose data of multiple positions and poses an electronic device respectively uses during a first movement process, where the first trajectory data includes the first position and pose data and the second position and pose data, and the target region is observed under the position and pose corresponding to any piece of position and pose data in the first trajectory data; based on the first weight and the second weight, performing region position fusion processing on the first region position and the second region position to acquire the third region position of the target region includes: performing region position fusion processing on multiple region positions respectively corresponding to multiple pieces of position and pose data in the first trajectory data to acquire a fourth region position of the target region, where the fourth region position is used to acquire the third region position.

Optionally, the target region positioning method further includes: acquiring second trajectory data including position and pose data of multiple positions and poses the electronic device respectively uses during a second movement process, where the target region is observed under the position and pose corresponding to any piece of position and pose data in the second trajectory data; performing region position fusion processing on multiple region positions respectively corresponding to multiple pieces of position and pose data in the second trajectory data to acquire a fifth region position of the target region; based on a weight of the fourth region position and a weight of the fifth region position, performing region position fusion processing on the fourth region position and the fifth region position to acquire the third region position.

Optionally, before performing region position fusion processing on the fourth region position and the fifth region position, the method further includes: acquiring an overlapping region area of the fourth region position and the fifth region position; acquiring a ratio of the overlapping region area to a single region area, where the single region area is a region area of the fourth region position or a region area of the fifth region position; in response to that the acquired ratio is not less than a preset ratio threshold, executing the step of performing region position fusion processing on the fourth region position and the fifth region position.

Optionally, the target region positioning method further includes: acquiring third trajectory data including the position and pose data of the multiple positions and poses the electronic device respectively uses during the first movement process; detecting whether loopback position and pose data of target position and pose data is present, where the target position and pose data is any piece of position and pose data in the third trajectory data; in response to presence of the loopback position and pose data, acquiring loopback relative position and pose data based on the target position and pose data and the loopback position and pose data; based on the loopback relative position and pose data, performing optimization processing on the third trajectory data to acquire the first trajectory data.

Optionally, the target region includes a parking space region; the target region positioning method further includes: based on the third region position, executing mapping operation to acquire mapping result information, where the mapping result information includes identifier information of a region position of the parking space region; based on the identifier information and positioning information of a vehicle, executing parking operation to enable the vehicle to be parked in the parking space region.

According to a second aspect of embodiments of the present disclosure, there is provided a target region positioning apparatus. The apparatus includes: a first acquiring module, configured to acquire a first region position corresponding to first position and pose data and a second region position corresponding to second position and pose data, where the first region position is a region position of a target region observed under a position and pose corresponding to the first position and pose data, and the second region position is a region position of the target region observed under a position and pose corresponding to the second position and pose data; a second acquiring module, configured to acquire a first weight of the first region position and a second weight of the second region position, where the first weight is acquired based on the first position and pose data and the first region position and the second weight is acquired based on the second position and pose data and the second region position; a processing module, configured to, based on the first weight and the second weight, perform region position fusion processing on the first region position and the second region position to acquire a third region position of the target region.

According to a third aspect of embodiments of the present disclosure, there is provided an electronic chip, including a processor configured to execute computer program instructions stored in a memory, where the computer program instructions are executed by the processor to cause the electronic chip to perform the method of any one item as mentioned in the first aspect.

According to a fourth aspect of embodiments of the present disclosure, there is provided an electronic device, including a memory for storing computer program instructions, a processor for executing the computer program instructions and a communication apparatus, where the computer program instructions are executed by the processor to cause the electronic device to perform the method of any one item as mentioned in the first aspect.

According to a fifth aspect of embodiments of the present disclosure, there is provided a computer readable storage medium storing a computer program, where the computer program is run on a computer to cause the computer to perform the method of any one item as mentioned in the first aspect.

According to a sixth aspect of embodiments of the present disclosure, there is provided a computer program product, including a computer program, where the computer program is run on a computer to cause the computer to perform the method of any one item as mentioned in the first aspect.

The embodiments of the present disclosure can improve the positioning accuracy for the target region.

**BRIEF DESCRIPTION OF DRAWINGS**

In order to more clearly describe the technical solutions in the embodiments of the present disclosure, the drawings required for descriptions of the embodiments will be briefly introduced. Apparently, the drawings described hereunder are merely some embodiments of the present disclosure. Those skilled in the arts can obtain other drawings based on these drawings without making creative work.

FIG. 1 is a flowchart illustrating a target region positioning method according to one embodiment of the present disclosure.
FIG. 2 is a schematic diagram of performing fusion on parking space regions observed under different vehicle body positions and poses in a same trajectory according to one embodiment of the present disclosure.
FIG. 3 is a schematic diagram of performing fusion on parking space regions acquired under different trajectories according to one embodiment of the present disclosure.
FIG. 4 is a schematic diagram illustrating a trajectory formed by a series of vehicle body positions and poses collected by a vehicle-end odometer according to one embodiment of the present disclosure.
FIG. 5 is a schematic diagram illustrating an actual vehicle body trajectory corresponding to the trajectory shown in FIG. 4 according to one embodiment of the present disclosure.
FIG. 6 is a block diagram illustrating a principle of a target region positioning apparatus according to one embodiment of the present disclosure.
FIG. 7 is a structural schematic diagram illustrating a computer device according to one embodiment of the present disclosure.

**DETAILED DESCRIPTION**

In order to better understand the technical solutions of the present disclosure, detailed descriptions will be made below to the embodiments of the present disclosure in combination with drawings.

It should be clearly noted that the embodiments described herein are merely some embodiments of the present disclosure rather than all embodiments. All other embodiments obtained by persons of ordinary skill in the arts based on these embodiments of the present disclosure without making creative work shall fall within the scope of protection of the present disclosure.

The terms used in the embodiments of the present disclosure are used only for the purpose of describing particular embodiments rather than limiting the present disclosure. The terms "a", "said" and "the" in singular form used in the embodiments of the present disclosure and the appended claims are also intended to include plurality unless otherwise clearly indicated.

It should be understood that the term "at least one" used herein refers to one or more, and "plural" refers to two or more. The term "and/or" used herein only represents an association relationship of associated objects, which includes presence of three relationships. For example, A and/or B may represent that A exists alone, A and B exist at the same time, and B exists alone, where A and B may be in singular or plural form. Furthermore, the character "/" herein generally represents an "or" relationship of objects associated back and forth. "At least one of the following" and its similar expressions refer to any combination of these items, for example, any combination of single or plural items. For example, At least one of a, b and c may represent: a, b, c, a-b, a-c, b-c, or a-b-c, where a, b, and c each may be one or more.

It should be understood that although the terms "first" and "second" and the like may be used to describe set thresholds in the embodiments of the present disclosure, these set thresholds are not limited to these terms. These terms are used only to distinguish these set thresholds. For example, without departing from the scope of protection of the embodiments of the present disclosure, the first set threshold may also be referred to as the second set threshold, and similarly, the second set threshold may also be referred to as the first set threshold.

The terms used in the detailed descriptions of the embodiments of the present disclosure are used only to interpret the specific embodiments of the present disclosure rather than to limit the present disclosure.

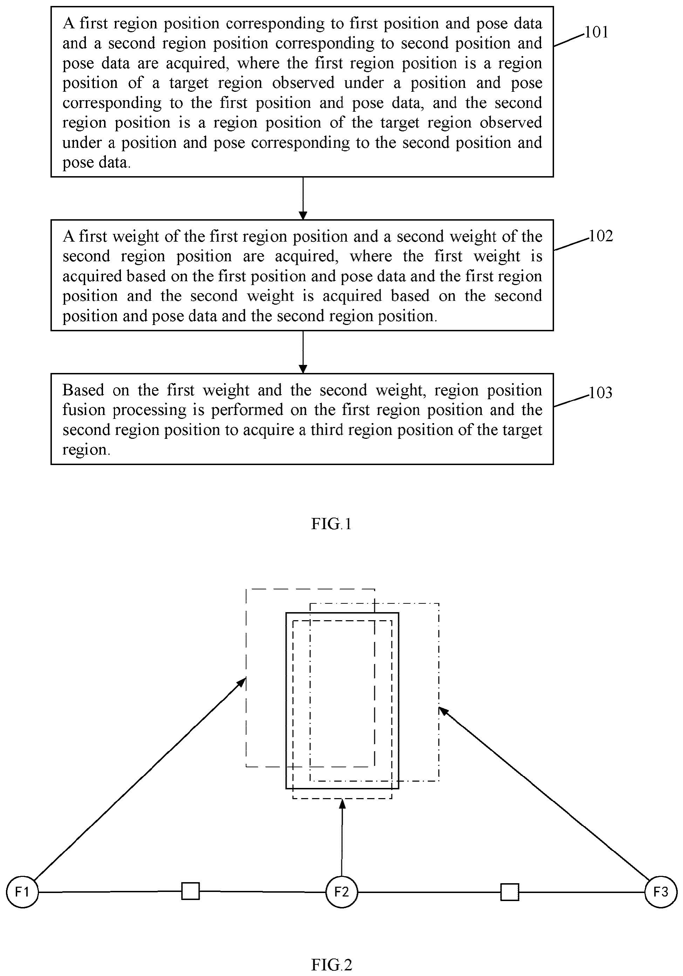

As shown in FIG. 1, one or more embodiments of the present disclosure provide a target region positioning method. The method includes steps 101 to 103.

At step 101, a first region position corresponding to first position and pose data and a second region position corresponding to second position and pose data are acquired, where the first region position is a region position of a target region observed under a position and pose corresponding to the first position and pose data, and the second region position is a region position of the target region observed under a position and pose corresponding to the second position and pose data.

In one embodiment, the first position and pose data and the second position and pose data may be any two pieces of position and pose data of a target object capable of observing the target region under the corresponding positions and poses. The first position and pose data and the second position and pose data may be position and pose data of poses of a same target object at different times, for example, may be position and pose data of two poses that the target object sequentially uses in a movement process, or may be position and pose data of poses of different target objects at a same time, or may be position and pose data of poses of different target objects at different times.

In one embodiment, the position and pose data may include at least one of position data and pose data. For example, the position and pose data may include position data and pose data. For another example, the position and pose data may include position data and the pose data at different positions may be same by default.

With a vehicle travel trajectory as an example, a vehicle may generate a series of position and pose data during a travel process, and this series of position and pose data may form a travel trajectory of the vehicle. In one embodiment, the first position and pose data and the second position and pose data may be any two pieces of position and pose data in the travel trajectory of the target object.

In one embodiment, the target object may be an electronic device such as a vehicle (for example, self-driving vehicle) and unmanned aerial vehicle and the like.

In one embodiment, the target region may be a region such as a parking space region and a commodity storage region and the like.

In one embodiment, the target object may observe the target region. In one implementation, the region position of the target region may be acquired based on the data collected by the data collection devices such as an image collection device, a distance sensor and a laser radar and the like of the target object.

When the target region, for example, is a parking space region, the region position of the target region may be corner point positions of four corner points of the rectangular parking space region, corner point positions of two opposed corner points (i.e. non-adjacent corner points, where a line connecting two adjacent corner points is one side of the rectangle) of the rectangular parking space region, or position data of a boundary line (or referred to as parking space line) of the parking space region or the like.

Therefore, the region position can reflect not only the positioning position of the target region but also the size of the target region.

In one embodiment, the position and pose data may be data of a vehicle pose in a vehicle travel trajectory, and the region position corresponding to the position and pose data may be acquired based on a three-dimensional (3D) perception result of the vehicle end for the parking space line of the parking space region.

In one embodiment, a cloud end may use data uploaded by the vehicle end to acquire a positioning result of the parking space line, and perform processings such as trajectory optimization and packing space line reconstruction and the like as required. The data uploaded by the vehicle end may include a self-driving vehicle trajectory and may also include a 3D perception result of the vehicle end for the parking space line, for example, lidar feature data and PSD3D perception data, where PSD refers to a format capable of supporting all-image color mode.

At step 102, a first weight of the first region position and a second weight of the second region position are acquired, where the first weight is acquired based on the first position and pose data and the first region position and the second weight is acquired based on the second position and pose data and the second region position.

For an actually-existing same target region, the region positions of the target region acquired by observing the target region under different positions and poses are generally different. Considering observation distances and/or observation angles for observing a same target region under different positions and poses are different, there may be a large difference in an observation accuracy of the target region. Therefore, when fusion is performed on the region positions observed under different positions and poses, a corresponding weight (or referred to as fusion weight) of each region position may also be taken into account.

In the step 102, the weight of each region position may be determined based on position and pose data and region position, namely, the weight of each region position may be determined based on observation distance and/or observation angle.

In one embodiment, an observation distance and/or observation angle may be acquired based on position and pose data and region position.

In one embodiment, the observation distance is negatively correlated with the weight. The larger the observation distance is, the smaller the determined weight is, and otherwise, the larger the determined weight is.

In one embodiment, an offset value of the observation angle is negatively correlated with the weight. The more exactly the observation angle faces toward the target region (the smaller the offset value of the observation angle), the larger the determined weight is, and otherwise, the smaller the determined weight is.

At step 103, based on the first weight and the second weight, region position fusion processing is performed on the first region position and the second region position to acquire a third region position of the target region.

In one embodiment, the third region position may be a fused region position acquired by performing region position fusion processing on the first region position and the second region position. In another embodiment, the third region position may also be a region position acquired by performing further processing on the fused region position (for example, performing further update fusion with other fused region positions).

In one embodiment, the third region position of the target region may be taken as the positioning position of the target region.

In the embodiment shown in FIG. 1, fusion processing may be performed on at least two region positions. For example, when other region positions are acquired, fusion processing may also be performed on all or part of the acquired region positions.

FIG. 2 is a schematic diagram of performing fusion on parking space regions observed under different vehicle body positions and poses in a same trajectory. As shown herein, the weight of the region position (as shown by a sparse dashed line rectangular box in FIG. 2) observed under the "F1" position and pose may be smaller than the weight of the region position (as shown by a dense dashed line rectangular box in FIG. 2) observed under the "F2" position and pose, and the weight of the region position (as shown by a dot-dash line rectangular box in FIG. 2) observed under the "F3" position and pose may be smaller than the weight of the region position observed under the "F2" position and pose. After the weights are determined, fusion processing may be performed on the three region positions based on the three weights to acquire a fused region position. In one embodiment, the acquired fused region position may be as indicated by the solid line rectangular box in FIG. 2.

In one embodiment of the present disclosure, the target region includes a parking space region; the first region position includes a position of a first corner point of the parking space region and a position of a second corner point of the parking space region, where the first corner point and the second corner point are two non-adjacent corner points of the parking space region; the second region position includes the position of the first corner point and the position of the second corner point.

In this case, the step 103 of performing region position fusion processing on the first region position and the second region position based on the first weight and the second weight to acquire the third region position of the target region may include: based on the first weight and the second weight, performing fusion processing on the position of the first corner point included in the first region position and the position of the first corner point included in the second region position to acquire a third position of the first corner point; based on the first weight and the second weight, performing fusion processing on the position of the second corner point included in the first region position and the position of the second corner point included in the second region position to acquire a third position of the second corner point; and based on the third position of the first corner point and the third position of the second corner point, acquiring the third region position of the target region.

By performing fusion processing on two opposed corner points of the target region respectively, two fused opposed corner points may be acquired and then based on the two fused opposed corner points, the positioning position of the target region may be determined.

In one embodiment, the positioning position of the target region may include the positions of two fused opposed corner points or the positions of other two opposed corner points calculated based on the positions of the two fused opposed corner points, or the parking space line of the parking space region calculated based on the positions of the two fused opposed corner points.

In another embodiment, fusion processing may also be performed on all or any three of the corner points of the target region respectively, and then based on the position of each fused opposed corner point, the positioning position of the target region may be determined.

In one embodiment, weighted fusion may be performed on the four corner points of the rectangular parking space (or referred to as rectangular parking space region) respectively in the following formula:

$$p_i^{\,fused} = \frac{1}{\sum\limits_{k=1}^{m} \omega_k} \sum\limits_{k=1}^{m} \omega_k p_{i\,k}$$

where $p_i^{f\,used}$ represents the corner point position acquired by performing weighted fusion on the i-th corner point of the rectangular parking space (the fused object is the corner point position in the observed region position), $\omega_k$ represents the weight of the region position corresponding to the k-th position and pose data, m refers to a total number of pieces of position and pose data, $p_{i\,k}$ represents the corner point position of the i-th corner point in the region position corresponding to the k-th position and pose data.

In the embodiment shown in FIG. 1, the weights of the region positions observed under different positions and poses may be determined based on the position and pose data for observing the target region and the observed region position and thus, based on the weights of the region positions, fusion is performed on at least two region positions. The region position acquired by fusion processing is generally more approximate to the actual positioning position of the target region. In this way, the positioning accuracy of the target region can be improved.

In one embodiment, a data source for positioning the target region may be crowd-sourced data. For example, in one embodiment, based on a crowd-sourced data source collected and reported by each self-driving vehicle, positioning for the parking region can be achieved and further, based on the positioning data of the parking region, mapping is carried out on the parking space line in a parking lot. In this way, mapping costs can be reduced and the mapping update efficiency can be improved.

In one embodiment, based on the positioning position of the target region, subsequent processings such as route navigation planning, positioning position displaying and automatic parking in the parking lot and the like can be performed.

In one embodiment, the target region includes a parking space region; the target region positioning method shown in FIG. 1 may further include: based on the third region position, executing mapping operation to acquire mapping result information, where the mapping result information includes identifier information of the region position of the parking space region; based on the identifier information and positioning information of a vehicle, executing parking operation to enable the vehicle to be parked in the parking space region.

In one embodiment, the third region position may be taken as the accurate positioning position of the parking space region. Thus, based on the third region position, mapping operation may be performed to acquire mapping result information. In one embodiment, the acquired mapping result information may be a three-dimensional model of the parking lot.

In order to acquire the mapping result information of the parking lot, mapping operation may be performed based on the positioning positions of other parking space regions in the parking lot as well as on the third region position. The positioning positions of other parking space regions can also be acquired by the method shown in FIG. 1. Thus, All of the observed parking space regions can be reconstructed by the mapping operation.

The mapping result information may include identifier information of the region position of the parking space region, where the identifier information may be a parking space line of the parking space region, or four corner points of the rectangular parking space region or two opposed corner points of the rectangular parking space region or the like.

Based on the acquired mapping result information, a communication connection with a vehicle to be parked may be established, and then based on the established communication connection, the vehicle (e.g. self-driving vehicle) is controlled to execute automatic parking function in the parking lot so as to automatically park in the parking space region without needing human parking operation.

In another embodiment, the mapping result information may also be distributed to the vehicle such that the vehicle performs parking operation based on the identifier information and the positioning information of the vehicle so as to automatically park in the parking space region. In one embodiment, the self-driving vehicle may use the mapping result of the parking space line in the parking lot to achieve autonomous parking function in the parking lot.

The step 102 of acquiring the weight of the region position corresponds to the implementation of determining the weight of the region position based at least on observation distance. In one embodiment of the present disclosure, the method shown in FIG. 1 may further include: based on the first position and pose data and the first region position, acquiring a first observation distance for the target region under the position and pose corresponding to the first position and pose data, and based on the second position and pose data and the second region position, acquiring a second observation distance for the target region under the position and pose corresponding to the second position and pose data; where the first weight is acquired based on the first observation distance and the second weight is acquired based on the second observation distance.

In one implementation, an observation distance may be acquired based on the position data in the position and pose data and in combination with the region position. For example, according to a region position, a position of a central point of the region is acquired, and further, a straight line distance from the position data in the position and pose data to the position of the central point of the region is taken as the observation distance. For another example, a shortest distance from the position data in the position and pose data to a region boundary of the target region is taken as the observation distance.

Since the observation accuracy for the target region is lower in a case of larger observation distance, the target region can be positioned without using the region position observed in a case of larger observation distance. Therefore, in one embodiment of the present disclosure, the first observation distance and the second observation distance both are smaller than a preset observation distance threshold. An observation accuracy for the target region under the observation distance smaller than the observation distance threshold satisfies a preset accuracy requirement.

In one embodiment, the accuracy requirement may be that an error between the observed data and the actual data is small, for example, less than 5%, 10% or the like of the actual data. In one embodiment, it is thought that when the observation distance is smaller than the observation distance threshold (e.g. 20 meters or 25 meters or the like), the observation accuracy satisfies the accuracy requirement.

In one embodiment, for the position and pose data under each position and pose the target object uses sequentially in a movement process, whether the target region can be observed under the position and pose corresponding to the position and pose data may be determined, that is, whether a region position observed under the position and pose corresponding to the position and pose data is present may be determined. If not present, the position and pose data is not used to position the target region, that is, the position and pose data is not used as the above first position and pose data or second position and pose data.

If a region position observed under the position and pose corresponding to the position and pose data is present, an observation distance may be further calculated based on the position and pose data and the region position, and whether the observation distance is smaller than the preset observation distance threshold (e.g. 20 meters) is determined. If not, the position and pose data is not used to position the target region, that is, the position and pose data is not used as the above first position and pose data or second position and pose data.

Those position and pose data not used to position the target region may be removed and the remaining position and pose data (including the above first position and pose data and second position and pose data) are used to position the target region. In this way, the positioning accuracy for the target region can be guaranteed and the data processing pressure for the positioning processing can be reduced.

Since the observation accuracy for the target region is higher in a case of small observation distance and lower in a case of larger observation distance, the weight of the region position can be negatively correlated with the observation distance.

In one embodiment of the present disclosure, when the first observation distance is smaller than the second observation distance, the first weight is larger than the second weight; when the first observation distance is larger than the second observation distance, the first weight is smaller than the second weight; when the first observation distance is equal to the second observation distance, the first weight is equal to the second weight.

The observation distance corresponding to the region position for positioning the target region is limited to be smaller than the observation distance threshold so as to remove the region positions observed under larger observation distance. In other implementations, the region positions observed under larger observation distance may not be removed and thus the region position observed under any observation distance can be used for positioning the target region.

With reference to FIG. 2, F1, F2 and F3 are frames at three adjacent moments. Since the observation distance under the "F1" position and pose is larger than the observation distance under the "F2" position and pose, the weight of the region position observed under the "F1" position and pose is smaller than the weight of the region position observed under the "F2" position and pose.

In one embodiment, let the weight be a reciprocal of the observation distance and thus the observation distance is negatively correlated with the weight of the region position.

In another embodiment, also let the weight be a difference obtained by subtracting the observation distance from the observation distance threshold, and thus the observation distance is negatively correlated with the weight of the region position. In this case, the larger the observation distance is, the smaller the weight of the observed region position.

Since the observation distance may be larger than the observation distance threshold, the difference obtained by subtracting the observation distance from the observation distance threshold is a negative value. In one embodiment, when the observation distance is smaller than the observation distance threshold, the difference obtained by subtracting the observation distance from the observation distance threshold is taken as the weight; when the observation distance is not smaller than the observation distance threshold, the weight may be zero.

In one embodiment of the present disclosure, when the first observation distance is smaller than the preset observation distance threshold, the first weight is a first difference between the observation distance threshold and the first observation distance; when the second observation distance is smaller than the observation distance threshold, the second weight is a second difference between the observation distance threshold and the second observation distance; where an observation accuracy for the target region under the observation distance smaller than the observation distance threshold satisfies a preset accuracy requirement.

In one embodiment of the present disclosure, when the first observation distance is not smaller than the observation distance threshold, the first weight is zero; when the second observation distance is not smaller than the observation distance threshold, the second weight is zero; where the observation accuracy for the target region under the observation distance smaller than the observation distance threshold satisfies the preset accuracy requirement.

In one embodiment, the weight can be calculated in the following formula:

$$\omega i = \max(20 - dist, 0)$$

where $\omega i$ represents the weight of the region position corresponding to the i-th position and pose data, and $\max(20 - dist, 0)$ represents obtaining a maximum value between 20-dist and 0, where dist refers to the observation distance and 20 refers to the preset observation distance threshold. Namely, the weight obtained within the observation range of 20 meters is 20-dist; and when the observation distance exceeds 20 meters, since the observation error is large, the corresponding region positions may be rejected, that is, not used for positioning the target region.

In one embodiment, those region positions with the weight being zero may be deleted based on the calculated weights, namely, positioning for the target region is not carried out based on the region positions with the weight being zero. In this way, the data processing pressure for the positioning processing can be reduced.

In another embodiment, the region positions with the weight being zero may not be deleted and hence the positioning for the target region can be performed based on each region position and the corresponding weight.

In one embodiment of the present disclosure, the method shown in FIG. 1 may further include: acquiring first trajectory data including position and pose data of multiple positions and poses an electronic device respectively uses during a first movement process, where the first trajectory data includes the first position and pose data and the second position and pose data, and the target region is observed under the position and pose corresponding to any piece of position and pose data in the first trajectory data.

Therefore, the step 103 of, based on the first weight and the second weight, performing region position fusion processing on the first region position and the second region position to acquire the third region position of the target region may include: performing region position fusion processing on multiple region positions respectively corresponding to multiple pieces of position and pose data in the first trajectory data to acquire a fourth region position of the target region, where the fourth region position is used to acquire the third region position. In this way, fusion of the region positions under continuous frames can be achieved. For example, when a rectangular parking space is observed, the rectangular parking spaces observed under continuous frames can be fused into one.

In one embodiment, when region position fusion processing is performed on multiple region positions, region position fusion processing can be performed based on the weights of the multiple region positions. The weights can be calculated by referring to the calculation of the weights of the first region position and the second region position.

In one embodiment, the first trajectory data may only include the first position and pose data and the second position and pose data. In another embodiment, the first trajectory data may include one or more pieces of position and pose data as well as the first position and pose data and the second position and pose data. When other position and pose data are present, the positioning for the target region can be achieved based on other position and pose data as well as on the first position and pose data and the second position and pose data.

In one embodiment, the multiple positions and poses may be, for example, a series of positions and poses the electronic device sequentially uses during a movement process. In one implementation, fusion may be performed on the parking space lines observed by the self-driving vehicle under continuous frames to realize the purpose of positioning the parking space line.

When the target region is to be positioned, it is possible that the electronic device cannot observe the target region under each position and pose. In one embodiment, the multiple positions and poses may be each position and pose under which the electronic device can observe the target region during the movement process.

For example, based on whether the target region can be observed, each piece of position and pose data in raw trajectory data (the raw trajectory data may include the position and pose data of the electronic device under each position and pose in one movement process collected by the electronic device) is processed to remove the position and pose data of each position and pose under which the target region cannot be observed and hence form the first trajectory data by using the remaining position and pose data. The movement trajectory of the electronic device corresponding to the first trajectory data may be one or more segments of trajectories in the movement trajectory of the electronic device corresponding to the raw trajectory data. The one or more segments of trajectories may be a trajectory along which the electronic device passes by the target region one or more times in one movement process.

When the target region is positioned based on the trajectories of the electronic device in a same movement process, the influence of the inter-device difference and the time difference at the time of large time span on the positioning accuracy of the target region can be eliminated so as to ensure the positioning accuracy.

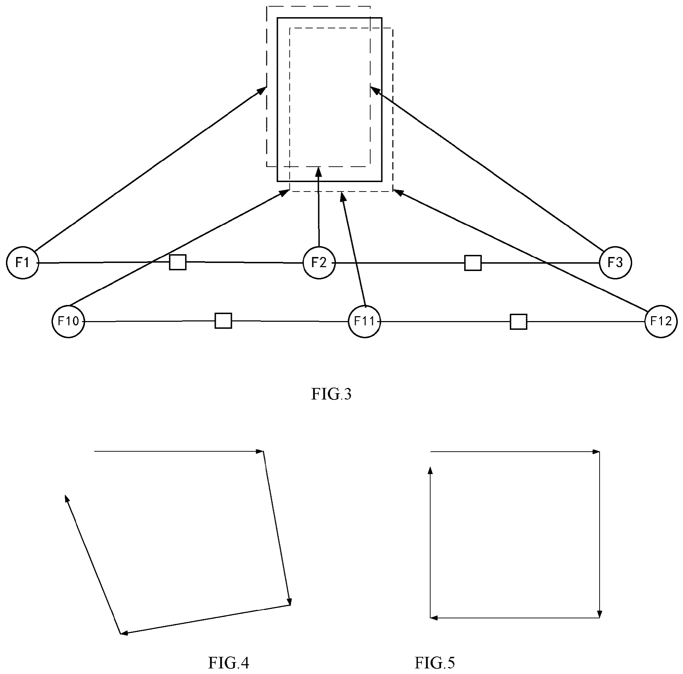

The same electronic device may pass by the same target region more than one time. For example, when a rectangular parking space is observed, the rectangular parking spaces observed under continuous frames may be fused into one. If the vehicle travel trajectory revisits a same position point, the same rectangular parking space may be observed a second time. The second observation may also be multiple continuous frames which can also be fused into one parking space line result. As shown in FIG. 3, "F1, F2 and F3" may represent multiple continuous frames at the time of the first observation and thus a parking space line result can be acquired by fusion, as indicated by the sparse dashed line rectangular box in FIG. 3. "F10, F11 and F12" may represent multiple continuous frames at the time of the observation in the second revisit and thus a parking space line result can be acquired by fusion, as indicated by the dense dashed line rectangular box in FIG. 3.

Since the same electronic device may pass by the same target region more than one time, different electronic devices may also pass by the same target region at the same time or sequentially, and one corresponding positioning position can be acquired by fusion based on the trajectory along which any electronic device passes by the target region any time. In this case, these positioning positions acquired by fusion may be further fused to acquire a unified positioning position, so as to achieve fusion update for the positioning position of the target region. Based on at least two levels of fusion update processing, the positioning accuracy for the target region can be further improved.

In one embodiment, one unified fusion update may be performed on multiple positioning positions and the positioning position acquired by fusion update is taken as the final positioning position of the target region.

In another embodiment, each time one positioning position is acquired, fusion update may be performed on the existing positioning position based on the positioning position to achieve continuous update fusion of the positioning position. The positioning position acquired by fusion update each time is taken as the final positioning position of the target region in a current stage.

In one embodiment of the present disclosure, the method shown in FIG. 1 may further include: acquiring second trajectory data including position and pose data of multiple positions and poses the electronic device respectively uses during a second movement process, where the target region is observed under the position and pose corresponding to any piece of position and pose data in the second trajectory data; performing region position fusion processing on multiple region positions respectively corresponding to multiple pieces of position and pose data in the second trajectory data to acquire a fifth region position of the target region; based on a weight of the fourth region position and a weight of the fifth region position, performing region position fusion processing on the fourth region position and the fifth region position to acquire the third region position.

In one embodiment, when region position fusion processing is performed on multiple region positions, region position fusion processing can be performed based on the weights of the multiple region positions. The weights can be calculated by referring to the calculation of the weights of the first region position and the second region position.

In one embodiment, before region position fusion processing is performed on the fourth region position and the fifth region position, an overlapping region area of the fourth region position and the fifth region position may be further calculated, a ratio of the overlapping region area to a single region area (the region area of the fourth region position or the region area of the fifth region position) is calculated, and whether the ratio is less than a corresponding preset ratio threshold is determined. For example, the preset ratio threshold may be any value between 0.5 and 0.8. If the ratio is not less than the corresponding preset ratio threshold, it is thought that the two region positions correspond to a same target region, and thus region position fusion processing may be performed on the fourth region position and the fifth region position, and otherwise, not performed on the fourth region position and the fifth region position.

In one embodiment, the movement trajectory of the electronic device corresponding to first trajectory data and the movement trajectory of the electronic device corresponding to second trajectory data may be trajectories along which the same electronic device passes by the target region any two times in a same movement process. In one implementation, fusion may be performed the parking space lines observed by the self-driving vehicle under continuous frames to achieve the positioning for the parking space line; and after the vehicle trajectory loopback, fusion is performed again on the parking space line positioning results for a same parking region in different time periods (e.g. the time periods in which the vehicle passes by the parking region two times in one movement process).

In another embodiment, the movement trajectory of the electronic device corresponding to first trajectory data and the movement trajectory of the electronic device corresponding to second trajectory data may be trajectories along which different electronic devices pass by the target region.

When the region positions acquired by fusion based on different trajectory data are further fused, the weights of the region positions may be firstly determined.

For any piece of trajectory data, by using multiple weights of multiple region positions respectively corresponding to multiple pieces of position and pose data (e.g. all or a random part) in the trajectory data, the weight of the region position acquired by fusion based on the trajectory data can be acquired, where multiple region positions are in one-to-one correspondence with multiple weights.

In one embodiment of the present disclosure, the method shown in FIG. 1 may further include: based on the weight of each region position for acquiring the fourth region position, acquiring the weight of the fourth region position; based on the weight of each region position for acquiring the fifth region position, acquiring the weight of the fifth region position.

In one embodiment, for the weight of the region position corresponding to each piece of position and pose data in the trajectory data, a sum of these weights may be taken as the weight of the region position acquired by fusion based on the trajectory data.

In one embodiment, the weight of the region position acquired by performing fusion on the region positions under continuous frames in the trajectory data is a sum of the weights of the region positions under the continuous frames. Based on multiple region positions acquired by fusion and corresponding weights, region position re-fusion may be performed. The multiple region positions acquired by fusion may be region positions acquired by fusion at the time of multiple revisits to the same target region. In a case of multiple revisits, unified fusion may be performed on the region positions acquired by fusion at the time of multiple revisits and the region position acquired by fusion at the time of the first visit to acquire a final region position.

In one embodiment, weighted fusion may be performed on the four corner points of the rectangular parking space (or referred to as rectangular parking space region) respectively in the following formula:

$$P_i^{fused} = \frac{1}{\sum\limits_{K=1}^{V} \omega_K} \sum\limits_{K=1}^{V} \omega_k P_{iK}$$

where $P_i^{fused}$ represents the corner point position acquired by performing weighted fusion on the i-th corner point of the rectangular parking space (the fused object is a corner point position in the region position acquired by fusion), $\omega_K$ represents the weight of the K-th region position acquired by fusion, V refers to a total number of region positions acquired by fusion, $p_{iK}$ represents the corner point position of the i-th corner point in the K-th region position acquired by fusion.

The region positions acquired by fusion may include V region positions respectively acquired by fusion at the time of V visits to the same rectangular parking space.

With reference to FIG. 3, the fourth region position may be a region position (as indicated by the sparse dashed line rectangular box in FIG. 3) acquired by performing fusion on the region positions observed under the "F1, F2 and F3" positions and poses in FIG. 3; the fifth region position may be a region position (as indicated by the dense dashed line rectangular box in FIG. 3) acquired by performing fusion on the region positions observed under the "F10, F11 and F12" positions and poses in FIG. 3; the third region position acquired by performing fusion on the fourth region position and the fifth region position may be as indicated by the solid line rectangular box in FIG. 3.

By using multiple frames of raw observation data in the vehicle travel trajectory, the rectangular parking space passed by the vehicle can be positioned, and when the parking space line is reconstructed based on a positioning result, the reconstruction accuracy can be guaranteed. By using each positioning result acquired at the time of passing by the same parking space multiple times in the vehicle travel trajectory, unified positioning may be performed on the rectangular parking space again, and then the reconstruction accuracy can be further improved when the parking space line is reconstructed based on a unified positioning result. In addition, the implementation can avoid re-projection optimization and hence greatly reduce the computation amount.

Since there may be a large deviation between the position and pose data collected by the electronic device and the actual position and pose data, the position and pose data collected by the electronic device may be optimized and then based on the optimized position and pose data, the target region is positioned. In this way, the positioning accuracy can be further improved.

Taking the position and pose data of the vehicle collected by a vehicle-end odometer as an example, since the vehicle-end odometer may continuously drift over time, the data collection error will be larger and larger. Thus, the vehicle body position and pose data collected by the vehicle-end odometer when the vehicle passes through a same position repeatedly has poor consistency. For example, the vehicle body position and pose data collected by the vehicle-end odometer indicate that the vehicle does not pass through the same position.

In one embodiment, with reference to FIGS. 4 and 5, the content shown in FIG. 4 may be a corresponding trajectory of the trajectory data formed by the position and pose data of the vehicle collected by the vehicle-end odometer, and the content shown in FIG. 5 may be an actual trajectory of the vehicle. It can be seen that there is a large deviation between the trajectory shown in FIG. 4 and the actual trajectory.

If positioning is performed on the parking space region based directly on the position and pose data collected by the vehicle-end odometer, the positioning accuracy is poor and the positioning result has a large deviation from the actual position, which is unfavourable for implementation of the automatic parking function of the vehicle.

In one embodiment of the present disclosure, the method shown in FIG. 1 may further include: acquiring third trajectory data including the position and pose data of the multiple positions and poses the electronic device respectively uses during the first movement process; detecting whether loopback position and pose data of target position and pose data is present, where the target position and pose data is any piece of position and pose data in the third trajectory data; in response to presence of the loopback position and pose data, acquiring loopback relative position and pose data based on the target position and pose data and the loopback position and pose data; based on the loopback relative position and pose data, performing optimization processing on the third trajectory data to acquire the first trajectory data.

In one embodiment, the third trajectory data may be raw trajectory data, and trajectory optimization may be performed on the raw trajectory data to acquire optimized trajectory data (i.e. the first trajectory data). The position and pose data in the third trajectory data may be the position and pose data collected by the electronic device, and the position and pose data in the first trajectory data may be the position and pose data acquired by performing optimization on the position and pose data collected by the electronic device. When the positioning is performed on the target region based on the optimized position and pose data, the positioning accuracy can be improved.

In one embodiment, whether the loopback position and pose data is present may be determined based on at least one of position spacing limitation and time limitation, where the position spacing limitation may include: limiting a distance between the target position and pose data and the loopback position and pose data to be not greater than a corresponding distance threshold; and the time limitation may include: limiting a time difference between a data sampling time of the target position and pose data and a data sampling time of the loopback position and pose data to be not less than a corresponding time threshold.

In one embodiment, along an advancing direction of the vehicle trajectory, other nearby vehicle body position and pose data ($T_j$) is searched for within a spatial scope around each piece of vehicle body position and pose data ($T_i$) in the vehicle trajectory to determine whether the loopback position and pose data of the vehicle body position and pose data ($T_i$) is present, where i and j both represent an index value of the vehicle body position and pose data. If there is any piece of vehicle body position and pose data ($T_j$) satisfying the following position spacing limitation and time limitation, it is thought that the i-th frame and the j-th frame are loopback frames. The vehicle body position and pose data ($T_j$) under the j-th frame is the loopback position and pose data of the vehicle body position and pose data ($T_i$) under the i-th frame. The vehicle body positions and poses of the vehicle body under the i-th frame and the j-th frame are consistent, and hence the vehicle body passes through a same position.

Position spacing limitation:

$$\left\| {}^w t_i - {}^w t_j \right\|_2 < threshold$$

Time limitation:

$$\left| i - k \right| > idx\_threshold$$

where w represents a coordinate system, $t_i$ represents position data in the vehicle body position and pose data ($T_i$), $t_j$ represents position data in the vehicle body position and pose data ($T_j$), $|i - k|$ represents the time difference between the i-th frame and the j-th frame. Based on the position spacing limitation, the distance between two pieces of position data can be limited to be less than the corresponding distance threshold, and based on the time limitation, the time difference of two frames can be limited to be greater than the corresponding threshold (idx_threshold).

If the i-th frame and the j-th frame are loopback frames, matching may be performed based on the vehicle body position and pose data ($T_i$) under the i-th frame and the vehicle body position and pose data ($T_j$) under the j-th frame, for example, on lidar feature data of both, so as to calculate loopback relative position and pose data $\,{}^j \hat{T}_i^{loop}\,$ between the vehicle body position and pose data ($T_i$, or denoted as ${}^w T_i$) and the vehicle body position and pose data ($T_j$, or denoted as ${}^w T_j$), and use the loopback relative position and pose data $\,{}^j \hat{T}_i^{loop}\,$ to perform trajectory optimization and obtain a position and pose graph; and loop may represent a loopback.

In one embodiment, the loopback relative position and pose data $\,{}^j \hat{T}_i^{loop}\,$ represents, for example, with one piece of position and pose data as reference, position data and pose data of the other piece of position and pose data relative to the one piece of position and pose data.

In one embodiment, trajectory optimization may be performed by using the loopback relative position and pose $^{j}\hat{T}_{i}^{loop}$ and the original relative position and pose $^{i}\hat{T}_{i+1}$ between continuous frames.

In one embodiment, in combination with loop closure edge residual, continuous edge residual and loss function, a trajectory optimization result at the time of minimized loss function is acquired. The vehicle trajectory reflected by the trajectory optimization result at the time of the minimized loss function may be substantially same as the actual trajectory that the vehicle travels. When positioning is performed based on the optimized trajectory, the positioning accuracy can be guaranteed. Loop closure edge residual:

$$e_{ij}^{loop} = Log(^{j}\hat{T}_{i}^{loop} \times {^{w}T_{i}^{-1}} \times {^{w}T_{j}})$$

Continuous edge residual:

$$e_{i,i+1} = Log(^{i+1}\hat{T}_{i} \times {^{w}T_{i}^{-1}} \times {^{w}T_{i+1}})$$

Loss function:

$$J = \sum_{i,j \in S} \left\| e_{ij}^{loop} \right\|_{2} + \sum_{i=1}^{n-1} \left\| e_{i,i+1} \right\|_{2}$$

where $e_{ij}^{loop}$ represents the loop closure edge residual corresponding to the vehicle body position and pose data ($^{w}T_{i}$) of the i-th frame and the vehicle body position and pose data ($^{w}T_{j}$) of the j-th frame, $e_{i,i+1}$ represents the continuous edge residual corresponding to the vehicle body position and pose data ($^{w}T_{i}$) of the i-th frame and the vehicle body position and pose data ($^{w}T_{i+1}$) of the (i+1)-th frame, $^{i+1}\hat{T}_{i}$ represents the relative position and pose data between the vehicle body position and pose data ($^{w}T_{i}$) and the vehicle body position and pose data ($^{w}T_{i+1}$), J represents the loss function, and n is a total number of frames.

In one embodiment, the loopback position and pose data may be acquired from the third trajectory data, i.e. from the same trajectory data. When the loopback position and pose data is acquired from the same trajectory data, the influence of the inter-device difference and the time difference at the time of large time span on accurate acquisition of the loopback position and pose data can be eliminated so as to acquire more accurate loopback position and pose data. In this way, the trajectory optimization effect can be improved and thus the positioning accuracy for the target region can be increased.

In one embodiment, the loopback position and pose data may also be acquired from other trajectory data of the same electronic device or the trajectory data of other electronic devices.

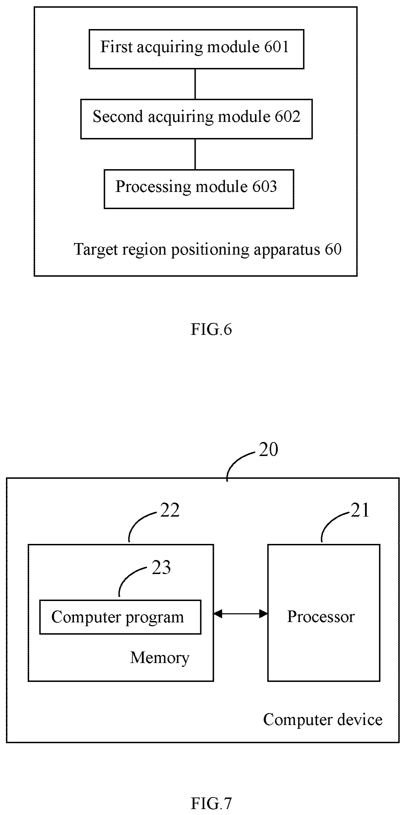

As shown in FIG. 6, an embodiment of the present disclosure provides a target region positioning apparatus 60, which includes a first acquiring module 601, a second acquiring module 602 and a processing module 603. The first acquiring module 601 is configured to acquire a first region position corresponding to first position and pose data and a second region position corresponding to second position and pose data, where the first region position is a region position of a target region observed under a position and pose corresponding to the first position and pose data, and the second region position is a region position of the target region observed under a position and pose corresponding to the second position and pose data. The second acquiring module 602 is configured to acquire a first weight of the first region position and a second weight of the second region position, where the first weight is acquired based on the first position and pose data and the first region position and the second weight is acquired based on the second position and pose data and the second region position. The processing module 603 is configured to, based on the first weight and the second weight, perform region position fusion processing on the first region position and the second region position to acquire a third region position of the target region.

One embodiment of the present disclosure provides an electronic chip, including a processor configured to execute computer program instructions stored in a memory, where the computer program instructions are executed by the processor to cause the electronic device to perform the method mentioned in any one of the above embodiments of the present disclosure.

One embodiment of the present disclosure provides an electronic device, including a memory configured to store computer program instructions, a processor for executing the computer program instructions and a communication apparatus, where the computer program instructions are executed by the processor to cause the electronic device to perform the method mentioned in any one of the above embodiments of the present disclosure.

One embodiment of the present disclosure provides a computer readable storage medium storing computer programs, where the computer programs are run on a computer to cause the computer to perform the method mentioned in any one of the above embodiments of the present disclosure.

One embodiment of the present disclosure provides a computer program product including computer programs, where the computer programs are run on a computer to cause the computer to perform the method mentioned in any one of the above embodiments of the present disclosure.

FIG. 7 is a schematic diagram illustrating a computer device according to an embodiment of the present disclosure. As shown in FIG. 7, the computer device 20 in this embodiment includes: a processor 21 and a memory 22, where the memory 22 is configured to store computer programs 23 run on the processor 21, and the computer programs 23 are executed by the processor 21 to perform the steps of the method embodiments of the present disclosure. For avoidance of repetition, no redundant descriptions are made herein. Alternatively, the computer programs 23 are executed by the processor 21 to implement the function of each model/unit in the apparatus embodiments of the present disclosure. For avoidance of repetition, no redundant descriptions are made herein.

The computer device 20 includes but not limited to the processor 21 and the memory 22. Those skilled in the arts can understand that FIG. 7 is only an example of the computer device 20 and does not constitute any limitation to the computer device 20 and also may include more or less components than shown in the drawings or combine some components or different components. For example, the computer device may also include an input and output device, a network access device and a bus and the like.

The processor 21 may be a central processing unit (CPU), and may also be another general processor, a Digital Signal Processor (DSP), an Application specific Integrated Circuit (ASIC), a Field-Programmable Gate Array (FPGA), or another programmable logic device, a discrete gate or transistor logic device and discrete hardware component and the like. The general processor may be a microprocessor or any conventional processor or the like.

The memory 22 may be an internal storage unit of the computer device 20, for example, a hard disk drive or internal memory of the computer device 20. The memory 22 may also be an external storage device of the computer device 20, for example, a plug-in harddisk drive and a Smart Media (SM) card, a Secure Digital (SD) card, or a Flash Card or the like provided on the computer device 20. Furthermore, the memory 22 may include not only the internal storage unit of the computer device 20 but also the external storage device. The memory 22 is configured to store the computer programs 23 and other programs and data desired by the computer device. The memory 22 is further configured to temporarily store data that has been output or is to be output.

In the plural embodiments provided by the present disclosure, it should be understood that the disclosed system, apparatus and method can be implemented another way. For example, the apparatus embodiments described above are merely illustrative, for example, the division of the units is only a logical functional division and may be carried out another way during practical implementation. For example, multiple units or components may be combined or integrated into another system or some features may be neglected or not implemented. On the other hand, mutual coupling or direct coupling or communication connection displayed or discussed may be indirect coupling or communication connection via some interfaces, apparatuses or units, and may be in electrical or mechanical or other forms.

The units described as separate members may be or not be physically separated, and the members displayed as units may be or not be physical units, i.e., may be located in one place, or may be distributed to a plurality of network units. Part or all of the units may be selected according to actual requirements to implement the objectives of the solutions in the embodiments.

Furthermore, various functional units in various embodiments of the present disclosure may be integrated into one processing unit, or may be present physically separately, or two or more units thereof may be integrated into one unit. The above integrated unit may be implemented by hardware or by hardware plus software functional unit.

The integrated unit implemented by software functional unit may be stored in one computer readable storage medium. The above software functional unit is stored in one storage medium and includes plural instructions to cause a computer device (may be personal computer, server, or network apparatus or the like) or processor to perform some steps of the method in the above embodiments of the present disclosure. The above storage medium includes a USB flash disk, a removable hard disk drive, a Read-Only Memory (ROM), a Random Access Memory (RAM), a magnetic diskette or compact disk and other mediums capable of storing program codes.

In the embodiments of the present disclosure, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

The present disclosure can be described in a general context of the computer executable instructions executable by the computer, for example, program module. Generally, the program module includes routine, program, object, component and data structure and the like for performing specific task or implementing a specific abstract data type. The present disclosure may also be practiced in a distributed computing environments, and in these distributed computing environments, tasks are performed by a remote processing device connected via communication network. In the distributed computing environments, the program module may be located in local or remote computer storage medium including a storage device.

Different embodiments in the present disclosure are all described in a progressive manner. Each embodiment focuses on the differences from other embodiments with those same or similar parts among the embodiments referred to each other. Particularly, since apparatus embodiments are basically similar to the method embodiments, the apparatus embodiments are briefly described with relevant parts referred to the descriptions of the method embodiments.

Persons of ordinary skills in the arts can realize that each unit or algorithm step described in the embodiments of the present disclosure can be implemented by electronic hardware or by combination of computer software and electronic hardware. Whether these functions are executed by hardware or software depends on the specific applications and design constraint conditions of the technical solutions. Professional technicians may use a different method to implement the described function for each specific application but this implementation shall not be deemed as exceeding the scope of the present disclosure.

Those skilled in the arts can clearly understand that for ease of descriptions and conciseness, the specific working process of the above-described system, apparatus and unit can be referred to the corresponding process of the above method embodiments and will not be repeated herein.

The above descriptions are only preferred embodiments of the present disclosure and not intended to limit the present disclosure. Any modifications, equivalent substitutions and improvements and the like made within the spirit and principle of the present disclosure shall all be incorporated in the scope of protection of the present disclosure.

## Claims

1. A target region positioning method, comprising:

   acquiring a first region position corresponding to first position and pose data and a second region position corresponding to second position and pose data, wherein the first region position is a region position of a target region observed under a position and pose corresponding to the first position and pose data, and the second region position is a region position of the target region observed under a position and pose corresponding to the second position and pose data;
   acquiring a first weight of the first region position and a second weight of the second region position, wherein the first weight is acquired based on the first position and pose data and the first region position and the second weight is acquired based on the second position and pose data and the second region position;
   based on the first weight and the second weight, performing region position fusion processing on the first region position and the second region position to acquire a third region position of the target region.

2. The method of claim 1, further comprising:

   based on the first position and pose data and the first region position, acquiring a first observation distance for the target region under the position and pose corresponding to the first position and pose data, and based on the second position and pose data and the second region position, acquiring a second observation distance for the target region under the position and pose corresponding to the second position and pose data;
   wherein the first weight is acquired based on the first observation distance and the second weight is acquired based on the second observation distance.

3. The method of claim 2, wherein,

   when the first observation distance is smaller than a preset observation distance threshold, the first weight is a first difference between the observation distance threshold and the first observation distance;
   when the second observation distance is smaller than the observation distance threshold, the second weight is a second difference between the observation distance threshold and the second observation distance;
   wherein an observation accuracy for the target region under the observation distance smaller than the observation distance threshold satisfies a preset accuracy requirement.

4. The method of claim 1, further comprising:

   acquiring first trajectory data comprising position and pose data of multiple positions and poses an electronic device respectively uses during a first movement process, wherein the first trajectory data comprises the first position and pose data and the second position and pose data, and the target region is observed under the position and pose corresponding to any piece of position and pose data in the first trajectory data;
   based on the first weight and the second weight, performing region position fusion processing on the first region position and the second region position to acquire the third region position of the target region comprises:
   performing region position fusion processing on multiple region positions respectively corresponding to multiple pieces of position and pose data in the first trajectory data to acquire a fourth region position of the target region, wherein the fourth region position is used to acquire the third region position.

5. The method of claim 4, further comprising:

   acquiring second trajectory data comprising position and pose data of multiple positions and poses the electronic device respectively uses during a second movement process, wherein the target region is observed under the position and pose corresponding to any piece of position and pose data in the second trajectory data;
   performing region position fusion processing on multiple region positions respectively corresponding to multiple pieces of position and pose data in the second trajectory data to acquire a fifth region position of the target region;
   based on a weight of the fourth region position and a weight of the fifth region position, performing region position fusion processing on the fourth region position and the fifth region position to acquire the third region position.

6. The method of claim 5, wherein, before performing region position fusion processing on the fourth region position and the fifth region position, the method further comprises:

   acquiring an overlapping region area of the fourth region position and the fifth region position;
   acquiring a ratio of the overlapping region area to a single region area, wherein the single region area is a region area of the fourth region position or a region area of the fifth region position;
   in response to that the acquired ratio is not less than a preset ratio threshold, executing the step of performing region position fusion processing on the fourth region position and the fifth region position.

7. The method of claim 4, further comprising:

   acquiring third trajectory data comprising the position and pose data of the multiple positions and poses the electronic device respectively uses during the first movement process;
   detecting whether loopback position and pose data of target position and pose data is present, wherein the target position and pose data is any piece of position and pose data in the third trajectory data;
   in response to presence of the loopback position and pose data, acquiring loopback relative position and pose data based on the target position and pose data and the loopback position and pose data;
   based on the loopback relative position and pose data, performing optimization processing on the third trajectory data to acquire the first trajectory data.

8. The method of claim 1, wherein the target region comprises a parking space region;

   the method further comprises: based on the third region position, executing mapping operation to acquire mapping result information, wherein the mapping result information comprises identifier information of a region position of the parking space region;
   based on the identifier information and positioning information of a vehicle, executing parking operation to enable the vehicle to be parked in the parking space region.

9. A parking lot mapping method, wherein mapping is performed on a parking space region based on the target region positioning method according to any one of claims 1 to 7.

10. A target region positioning apparatus, comprising:

    a first acquiring module, configured to acquire a first region position corresponding to first position and pose data and a second region position corresponding to second position and pose data, wherein the first region position is a region position of a target region observed under a position and pose corresponding to the first position and pose data, and the second region position is a region position of the target region observed under a position and pose corresponding to the second position and pose data;
    a second acquiring module, configured to acquire a first weight of the first region position and a second weight of the second region position, wherein the first weight is acquired based on the first position and pose data and the first region position and the second weight is acquired based on the second position and pose data and the second region position;
    a processing module, configured to, based on the first weight and the second weight, perform region position fusion processing on the first region position and the second region position to acquire a third region position of the target region.

11. An electronic device, comprising a memory storing computer program instructions, a processor executing the computer program instructions and a communication apparatus, wherein the computer program instructions are executed by the processor to cause the electronic device to perform the method of any one of claims 1 to 9.

12. A computer readable storage medium, storing a computer program, wherein the computer program is run on a computer to cause the computer to perform the method of any one of claims 1 to 9.

A first region position corresponding to first position and pose data and a second region position corresponding to second position and pose data are acquired, where the first region position is a region position of a target region observed under a position and pose corresponding to the first position and pose data, and the second region position is a region position of the target region observed under a position and pose corresponding to the second position and pose data. ⌐101

A first weight of the first region position and a second weight of the second region position are acquired, where the first weight is acquired based on the first position and pose data and the first region position and the second weight is acquired based on the second position and pose data and the second region position. ⌐102

Based on the first weight and the second weight, region position fusion processing is performed on the first region position and the second region position to acquire a third region position of the target region. ⌐103

FIG.1

FIG.2

FIG.3

FIG.4

FIG.5

First acquiring module 601

Second acquiring module 602

Processing module 603

Target region positioning apparatus 60

FIG.6

20

22

23

21

Computer program

Memory

Processor

Computer device

FIG.7

## INTERNATIONAL SEARCH REPORT

| International application No. |
|---|
| **PCT/CN2023/085085** |

### A. CLASSIFICATION OF SUBJECT MATTER

G01C21/20(2006.01)i; G01S17/86(2020.01)i; G08G1/14(2006.01)i

According to International Patent Classification (IPC) or to both national classification and IPC

### B. FIELDS SEARCHED

Minimum documentation searched (classification system followed by classification symbols)

IPC:G01C, G01S, G06F

Documentation searched other than minimum documentation to the extent that such documents are included in the fields searched

Electronic data base consulted during the international search (name of data base and, where practicable, search terms used)

CNTXT, CNKI, ENTXTC, WPABSC, DWPI: 北京初速度, 激光雷达, 图像, 距离, 目标区域, 对象, 目标, 存放区, 停车位, 库位线, 边界, 角点, 矩形, 区域, 环境, 探测, 调整, 匹配, 融合, 权重, 加权, 第一时刻, 第二时刻, 第一权重, 第二权重, 平均, 反比, 负相关, 倒数, 差值, 阈值, 观测, 观察, 指向, 轨迹, 位置, 位姿, 姿势, 角度, 位移, 长度, LIDAR, image, distance, target region, object, garage, parking spot, bank line, boundary, corner, rectangle, region, environment, probe, adjust, match, blend, weight, average, inverse correlation, difference, threshold, observation, pointing, trajectory, position, pose, angle, displacement, length

### C. DOCUMENTS CONSIDERED TO BE RELEVANT

| Category* | Citation of document, with indication, where appropriate, of the relevant passages | Relevant to claim No. |
|---|---|---|
| A | CN 110388922 A (CAINIAO SMART LOGISTICS HOLDING LTD.) 29 October 2019 (2019-10-29) description, paragraphs [0035]-[0159], and figures 1-9 | 1-12 |
| A | CN 105094335 A (SHARPNOW INC.) 25 November 2015 (2015-11-25) entire document | 1-12 |
| A | CN 110807478 A (BEIHANG UNIVERSITY) 18 February 2020 (2020-02-18) entire document | 1-12 |
| A | CN 111552757 A (SHANGHAI SENSETIME LINGANG INTELLIGENT TECHNOLOGY CO., LTD.) 18 August 2020 (2020-08-18) entire document | 1-12 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 October 2023** | **17 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/085085** |

### C.  DOCUMENTS CONSIDERED TO BE RELEVANT

| Category* | Citation of document, with indication, where appropriate, of the relevant passages | Relevant to claim No. |
| --- | --- | --- |
| A | CN 112365622 A (LAUNCH DIGITAL TECHNOLOGY CO., LTD.) 12 February 2021 (2021-02-12)<br>entire document | 1-12 |
| A | CN 113147738 A (CHONGQING ZHIXINGZHE INFORMATION TECHNOLOGY CO., LTD.) 23 July 2021 (2021-07-23)<br>entire document | 1-12 |
| A | CN 114445490 A (HUAWEI TECHNOLOGIES CO., LTD.) 06 May 2022 (2022-05-06)<br>entire document | 1-12 |
| A | CN 115468557 A (UBTECH ROBOTICS CORP., LTD.) 13 December 2022 (2022-12-13)<br>entire document | 1-12 |
| A | CN 115585818 A (CHINA STAR NETWORK APPLICATION CO., LTD.) 10 January 2023 (2023-01-10)<br>entire document | 1-12 |
| A | US 2022156976 A1 (SNAP INC.) 19 May 2022 (2022-05-19)<br>entire document | 1-12 |
| A | 徐辛超 等 (XU, Xinchao et al.). "一种优化权重的巡视器定位方法 (A rover positioning method with optimal weights)"<br>导航定位学报 (Journal of Navigation and Positioning),<br>Vol. 7, No. 2, 30 June 2019 (2019-06-30), pages 25-29<br>ISSN: 2095-4999,<br>entire document | 1-12 |

Form PCT/ISA/210 (second sheet) (July 2022)

### INTERNATIONAL SEARCH REPORT
#### Information on patent family members

International application No.

**PCT/CN2023/085085**

| Patent document cited in search report | | | Publication date (day/month/year) | Patent family member(s) | | | Publication date (day/month/year) |
|---|---|---|---|---|---|---|---|
| CN | 110388922 | A | 29 October 2019 | WO | 2019201228 | A1 | 24 October 2019 |
| CN | 105094335 | A | 25 November 2015 | WO | 2017020766 | A1 | 09 February 2017 |
| | | | | US | 2018225837 | A1 | 09 August 2018 |
| CN | 110807478 | A | 18 February 2020 | | None | | |
| CN | 111552757 | A | 18 August 2020 | WO | 2021218620 | A1 | 04 November 2021 |
| | | | | JP | 2022542289 | W | 30 September 2022 |
| CN | 112365622 | A | 12 February 2021 | | None | | |
| CN | 113147738 | A | 23 July 2021 | | None | | |
| CN | 114445490 | A | 06 May 2022 | WO | 2022089577 | A1 | 05 May 2022 |
| CN | 115468557 | A | 13 December 2022 | | None | | |
| CN | 115585818 | A | 10 January 2023 | | None | | |
| US | 2022156976 | A1 | 19 May 2022 | US | 11276201 | B1 | 15 March 2022 |

Form PCT/ISA/210 (patent family annex) (July 2022)